# EUROPÄISCHE PATENTANMELDUNG

(11) **EP 4 480 562 A1**
(43) Veröffentlichungstag der Anmeldung: **25.12.2024**
(21) Anmeldenummer: 24178861.1
(22) Anmeldetag: 29.05.2024
(51) Int. Cl.: B01D 3/08, B01D 3/10, B01D 3/42

(54) **VERFAHREN ZUR BESTIMMUNG EINES SIEDEPUNKTS EINES FLÜSSIGEN STOFFGEMISCHS SOWIE ROTATIONSVERDAMPFER MIT EINEM STRÖMUNGSSENSOR**

(30) Priorität: 22.06.2023 DE 102023116363
(71) Anmelder: KNF Neuberger GmbH, 79112 Freiburg (DE)
(72) Erfinder: Dimitrov, Martin, 79189 Bad Krozingen (DE); Cloos, Ferdinand-Julius, 79114 Freiburg i. Br. (DE); Swienty, Andreas, 79112 Freiburg (DE); Brugger, Fabian, 79206 Breisach am Rhein (DE)
(74) Vertreter: Mertzlufft-Paufler, Cornelius

(57) **Zusammenfassung**

Die Erfindung schlägt allgemein ein Verfahren (100) zur Bestimmung (105) eines Siedepunkts (21) eines flüssigen Stoffgemischs (4), das sich in einem Verdampferkolben (3) eines Rotationsverdampfers (1) befindet, vor, wobei ein Heizbad (10), in das der Verdampferkolben (3) eintaucht, erwärmt (101) wird, wobei eine einen Unterdruck erzeugende Pumpe (6) eingeschaltet (102) wird, so dass ein infolge der Erwärmung (101) und/oder dem Unterdruck aus dem flüssigen Stoffgemisch (4) freigesetztes Gas (8) aus dem Verdampferkolben (3) strömt (103), dadurch gekennzeichnet, dass ein Verlauf (20) eines Strömungsparameters (11) des strömenden Gases (8) erfasst (104) wird und dass der Siedepunkt (21) des flüssigen Stoffgemischs (4) bestimmt (105) wird, indem der erfasste (104) Verlauf (20) des Strömungsparameters (11) automatisiert ausgewertet (106) wird. Ferner wird ein Rotationsverdampfer (1), eine Messvorrichtung (12) und ein Verfahren (200) zur Steuerung des Rotationsverdampfers (1) vorgeschlagen

## Beschreibung

Die Erfindung betrifft ein Verfahren zur Erkennung eines Siedepunkts eines flüssigen Stoffgemischs, das sich in einem Verdampferkolben eines Rotationsverdampfers befindet, wobei ein Heizbad, in das der Verdampferkolben eintaucht, erwärmt wird, wobei eine einen Unterdruck erzeugende Pumpe eingeschaltet wird, so dass ein infolge der Erwärmung und/oder des Unterdrucks aus dem flüssigen Stoffgemisch freigesetztes Gas aus dem Verdampferkolben strömt.

Mit Siedepunkt sind Zustandsbedingungen gemeint, bei denen sich das Stoffgemisch in dem Punkt befindet, der den Übergang vom nichtsiedenden in den siedenden bzw. vom siedenden in den nichtsiedenden Zustand markiert. Beispielsweise kann im Siedepunkt eine Temperatursteigerung und/oder eine Druckabsenkung das Stoffgemisch in einen siedenden Zustand bringen. Hierzu ist ausreichend, dass eine Komponente des Stoffgemischs in einen siedenden Zustand gebracht wird. Mit Siedepunkt eines flüssigen Stoffgemischs ist somit gemeint, dass sich zumindest eine in dem Stoffgemisch gemischter Komponente des Stoffgemischs im Siedepunkt befindet. Hierbei ist zu beachten, dass sich der Siedepunkt einer Komponente in dem Stoffgemisch unter ansonsten gleichen Bedingungen von dem Siedepunkt unterscheiden kann, den die Komponente hat, wenn sie von dem Stoffgemisch isoliert ist.

Die Erfindung betrifft weiter einen Rotationsverdampfer, umfassend ein Behältnis für ein Heizbad, einen in dem Behältnis rotierbaren Verdampferkolben, einen Kondensator, einen Auffangkolben zur Aufnahme eines Kondensats aus dem Kondensator, einen Sensor und eine Pumpe, wobei durch die Pumpe zwischen dem Verdampferkolben und der Pumpe ein Strömungspfad eines aus dem Verdampferkolben strömenden Gases ausbildbar ist. Wie zuvor beschrieben umfasst der Rotationsverdampfer einen Sensor und somit genau einen oder mehr als einen Sensor.

Rotationsverdampfer werden zur Trennung wenigstens zweier Komponenten eines flüssigen Stoffgemischs verwendet. Dabei wird, wie eingangs beschrieben, das flüssige Stoffgemisch, welches sich in dem um seine Längsachse rotierbaren Verdampferkolben befindet, in das Heizbad eingetaucht und erwärmt. Eine Trennung der wenigstens zwei Komponenten des flüssigen Stoffgemischs wird erreicht, wenn sich deren Siedepunkte, insbesondere deren Siedetemperaturen und/oder Siededrücke, unterscheiden. Für eine optimale Trennung der wenigstens zwei Komponenten muss der Zeitpunkt erkannt werden, wann der Siedepunkt einer der wenigstens zwei Komponenten erreicht ist. Wird dieser Zeitpunkt nicht erkannt, kann es beispielsweise zu einem Überschäumen des Stoffgemischs kommen.

Häufig erfolgt zur verlässlichen Erkennung des Siedepunkts noch eine manuelle Beobachtung des flüssigen Stoffgemischs durch einen Anwender. Dabei wird durch den Anwender Blasenbildung und/oder Dampfbildung des flüssigen Stoffgemischs im Verdampferkolben festgestellt. Zwar ist die Erkennungsquote des Siedepunkts relativ hoch, doch ist dieses Verfahren aus ökonomischer und zeitlicher Sicht sehr aufwändig und somit kostspielig. Ferner stellt das manuelle Verfahren eine Gefahr für den Anwender dar, insbesondere wenn ein Rotationsverdampfer mit Unterdruck betrieben wird.

Aus dem Stand der Technik sind auch automatisierte Erkennungsverfahren bekannt. So ist bekannt für die Siedepunkterkennung eine Druckmessung durchzuführen, diese mit einer vorbekannten Druckkurve zu vergleichen und hieraus Rückschlüsse zu ziehen, ob ein Siedepunkt erreicht ist oder nicht. Solche vorbekannten Verfahren haben den Nachteil, dass vorbekannte Messkurven hinterlegt werden müssen. Außerdem ist die Erkennungsrate bei den vorbekannten Verfahren sehr niedrig.

Ein weiteres in der Praxis angewandte Verfahren analysiert die Ein- und Ausgangstemperatur des Kühlwassers im Kondensator. Durch die Kondensation wird dem Kühlwasser Energie hinzugefügt und die Kühlwassertemperatur steigt an. Anhand des Kühlwassertemperaturanstiegs zwischen Eingang und Ausgang des Kühlwasserkanals im Kondensator kann ein Siedepunkt identifiziert werden. Dieses Verfahren eignet sich verstärkt für die Einstellung der Kondensatorauslastung, weniger um den tatsächlichen Siedebeginn zu identifizieren.

Ein weiteres in der Praxis angewandte Verfahren analysiert die Gastemperatur im Strömungspfad zwischen Verdampferkolben und Kondensator. Bei beginnendem Sieden strömt durch das Wasserbad erwärmtes Gas entlang dieses Strömungspfad. Somit steigt die Gastemperatur im Strömungspfad an und der Siedepunkt wird identifiziert. Nachteilig dieses Verfahren ist, dass Siedepunkte sehr unsicher erkannt werden, wenn die Wasserbadtemperatur nahe der Umgebungstemperatur liegt. Bei dieser Situation ist die Gastemperatur im Strömungspfad bei einsetzendem Sieden nicht erhöht und kann somit nur unsicher anhand der Gastemperatur identifiziert werden.

Die Erfindung betrifft weiter eine Messvorrichtung für einen Rotationsverdampfer, eine Verwendung des Strömungssensors sowie eine Verwendung einer Messvorrichtung in einem Rotationsverdampfer.

Schließlich betrifft die Erfindung ein Verfahren zur Steuerung eines wie hierin beschriebenen Rotationsverdampfers.

Aufgabe der Erfindung ist, die Trennung von Komponenten in einem flüssigen Stoffgemisch zu verbessern. Insbesondere soll die Erkennung eines Siedepunkts des flüssigen Stoffgemischs verbessert werden.

Zur Lösung der genannten Aufgabe sind erfindungsgemäß die Merkmale des Anspruchs 1 vorgesehen. Insbesondere wird somit zur Lösung der genannten Aufgabe bei einem Verfahren der eingangs beschriebenen Art erfindungsgemäß vorgeschlagen, dass ein Verlauf eines Strömungsparameters des strömenden Gases erfasst wird und dass der Siedepunkt des flüssigen Stoffgemischs erkannt wird, indem der erfasste Verlauf des Strömungsparameters automatisiert ausgewertet wird. Mit Verlauf ist ein zeitlicher Verlauf gemeint. Mit automatisierter Auswertung ist eine Auswertung anhand eines Algorithmus gemeint. Die Auswertung erfolgt bevorzugt computergestützt.

Der Strömungsparameter beschreibt eine die Strömung des strömenden Gases betreffende physikalische Größe. Dies kann ein Volumenstrom, eine Masse, eine Durchflussmenge, eine Strömungsgeschwindigkeit oder eine äquivalente physikalische Eigenschaft des strömenden Gases sein.

Die Erfindung hat erkannt, dass durch die Erfassung des Verlaufs eines Strömungsparameters vorteilhaft Änderungen eines Strömungsparameters des freigesetzten Gases erfasst werden können, womit der Siedepunkt des flüssigen Stoffgemischs automatisiert ausgewertet werden kann.

Die Erfassung des Verlaufs des Strömungsparameters umfasst eine Erfassung zumindest eines Strömungsparameters des Gases.

Die Erfassung des Verlaufs des Strömungsparameters umfasst einen Zeitraum, in dem durch die Pumpe Unterdruck erzeugt wird, wobei das Erzeugen eines Unterdrucks ein Halten des Unterdrucks miteinschließt.

Als Erwärmung des Heizbades ist hier gemeint, dass eine Flüssigkeit, welche sich in einem vorzugsweise wie hierin beschriebenen Behältnis befindet, erwärmt wird. Als Flüssigkeit kommen bevorzugt Wasser oder Öl infrage. Die Erwärmung des Heizbades kann durch ein wie hierin beschriebenes Heizelement, beispielsweise bestrombare Heizspulen, erfolgen. Somit kann vorteilhaft eine Temperatur zur Erwärmung des Heizbades eingestellt und/oder reguliert werden.

Als Siedepunkt des flüssigen Stoffgemischs ist hier insbesondere der Siedepunkt einer ersten Komponente des flüssigen Stoffgemischs gemeint, wobei sich der Siedepunkt der ersten Komponente von einem Siedepunkt wenigstens einer zweiten Komponente des flüssigen Stoffgemischs unterscheidet. Die erste Komponente ist eine Flüssigkeit. Weitere Komponenten des flüssigen Stoffgemischs können Flüssigkeiten und/oder Feststoffe sein, wobei Feststoffe in der Flüssigkeit gelöst sind.

Die Siedetemperatur von Komponenten kann vorteilhaft durch den durch die angeschaltete Pumpe erzeugten Unterdruck herabgesetzt werden, sodass auch Komponenten, welche bei dem vorliegenden Umgebungsdruck (der häufig bei etwa 1.000 mbar liegt) eine relativ hohe Siedetemperatur haben, in einem flüssigen Stoffgemisch voneinander getrennt werden können. Die Pumpe kann eine Unterdruckpumpe, vorzugsweise eine Vakuumpumpe, sein.

Durch die automatisierte Auswertung sind keine subjektiven Beobachtungen eines Anwenders mehr zur Erkennung des Siedepunkts notwendig.

Die automatisierte Auswertung des Verlaufs des Strömungsparameters und somit die Erkennung des Siedepunkts bei dem erfindungsgemäßen Verfahren kann über einen Algorithmus erfolgen, welcher ohne hinterlegte Druckkurven und/oder anderer Parameterkurven für konkrete Stoffgemische auskommt.

Etwaige Merkmale des Verlaufs des Strömungsparameters, beispielsweise ein rapider Anstieg (der etwa durch ein Überschreiten eines Werts eines Anstiegswinkel oder durch ein Überschreiten eines Wertes einer Änderung des erfassten Strömungsparameters in einem vorgegebenen Zeitabschnitt definiert sein kann) einer Strömungsparameters des Gases, können durch den Algorithmus automatisiert zur Erkennung des Siedepunkts ausgewertet werden. Besonders bevorzugt erfolgt die automatisierte Auswertung durch eine Recheneinheit, insbesondere die weiter unten beschriebene und/oder beanspruchte.

Somit kann die Erkennung des Siedepunkts sehr genau und reproduzierbar mit sehr hoher Erkennungsrate durchgeführt werden.

Es kann insbesondere vorgesehen sein, dass die Auswertung des Verlaufs des Strömungsparameters umfasst, einen Wert einer Änderung des erfassten Strömungsparameters in einem vorgegebenen Zeitabschnitt zu bestimmen, und dass der Siedepunkt erkannt wird, indem ein Überschreiten eines vorgegebenen Änderungswerts festgestellt wird.

Das erfindungsgemäße Verfahren erkennt auch dann noch sehr genau den Siedepunkt des flüssigen Stoffgemischs, wenn sich das Mischungsverhältnis im flüssigen Stoffgemisch aufgrund der voranschreitenden Freisetzung des Gases ändert. Somit kann die Trennung von Komponenten in einem flüssigen Stoffgemisch besonders verbessert werden.

Der Verlauf des Strömungsparameters ist dadurch charakterisiert, dass er zumindest zwei Werte des Strömungsparameters zu unterschiedlichen Zeitpunkten umfasst. Der Verlauf des Strömungsparameters umfasst somit zumindest zwei Werte des Strömungsparameters des Gases zu zwei unterschiedlichen Zeitpunkten. Bevorzugt umfasst der jeweilige Verlauf jedoch eine Vielzahl von Werten. Eine Vielzahl von Werten liegt bei wenigstens 10 Werten vor. Die Werte werden besonders bevorzugt zu äquidistanten und/oder vorgegebenen und/oder bekannten Zeitpunkten erfasst. Die Erfassung des jeweiligen Strömungsparameters erfolgt besonders bevorzugt kontinuierlich, sodass ein kontinuierlicher Parameterverlauf vorliegt.

Bei einer vorteilhaften Ausführungsform des Verfahrens kann daher vorgesehen sein, dass eine Erfassung eines Strömungsparameters des strömenden Gases zu mehreren Zeitpunkten erfolgt. Die Erfassung des Strömungsparameters des strömenden Gases ermöglicht die Erfassung des Verlaufs des Strömungsparameters, insbesondere wenn der Strömungsparameters, wie vorgesehen sein kann, an mehreren Zeitpunkten gemessen bzw. erfasst wird.

Bevorzugt kann vorgesehen sein, dass die Erfassung des Strömungsparameters an einer Vielzahl von regelmäßig beabstandeten Zeitpunkten erfolgt.

Alternativ oder zusätzlich kann vorgesehen sein, dass eine Erfassung des Strömungsparameters kontinuierlich erfolgt. Somit kann der Strömungsparameter des strömenden Gases ohne zeitliche Unterbrechung durchgeführt werden, wodurch vorteilhaft ein zeitlich kontinuierlicher Verlauf des Strömungsparameters erfasst werden kann. Hierdurch kann der Siedepunkt besonders genau erkannt werden.

Bei einer vorteilhaften Ausführungsform des Verfahrens kann vorgesehen sein, dass ein Temperaturverlauf des Gases erfasst wird und dass der Siedepunkt des flüssigen Stoffgemischs erkannt wird, indem der erfasste Temperaturverlauf automatisiert ausgewertet wird. Durch die Erfassung des Temperaturverlaufs zusätzlich zum Verlauf des Strömungsparameters kann eine Erkennung des Siedepunkts noch exakter durchgeführt werden. Die beiden Verläufe können insbesondere in einer gemeinsamen Berechnungsvorschrift als Inputparameter einfließen, bei der ein einzelner Wert berechnet wird. Alternativ können die genannten Verläufe auch verwendet werden, um zwei oder auch mehr als zwei Werte zu erhalten. Diese können sodann zu einem Wert mit höherer Genauigkeit kombiniert werden. Alternativ kann durch einen Vergleich der Werte auch eine Kennziffer ermittelt werden, welche die Verlässlichkeit des mit dem Verlauf des Strömungsparameters ermittelten Werts bewertet.

Die soeben beschriebenen Vorteile sind noch ausgeprägter, wenn wie insbesondere vorgesehen sein kann, ein Temperaturverlauf des Gases erfasst wird. Hierzu wird insbesondere eine kontinuierliche Erfassung der Temperatur des Gases in dem gleichen Zeitraum durchgeführt, in dem eine hierin beschriebene Erfassung des Strömungsparameters durchgeführt wird. Somit können vorteilhaft über einen gleichen Zeitraum hinweg der Verlauf des Strömungsparameters und der Temperaturverlauf automatisiert ausgewertet werden, um den Siedepunkt zu erkennen.

Bei einer vorteilhaften Ausführungsform des Verfahrens kann vorgesehen sein, dass ein Gesamtdruck erfasst wird. Als Gesamtdruck ist hier der Druck gemeint, welcher in dem Rotationsverdampfer herrscht. Die Erfassung des Gesamtdrucks kann dann von Vorteil sein, wenn aufgrund von Veränderungen eines Systemparameters des Rotationsverdampfers der Gesamtdruck reguliert werden muss. So kann beispielsweise vorgesehen sein, dass der Gesamtdruck gehalten wird, wenn der Strömungsparameter einen bestimmten Wert erreicht hat und/oder wenn der Siedepunkt erreicht wurde. Auch zur Überwachung und/oder Regulierung der Funktionalität der Pumpe, welche den Unterdruck erzeugt, ist eine Erfassung des Gesamtdrucks von Vorteil.

Alternativ oder zusätzlich kann ein statischer Druck erfasst werden. Dies ist insbesondere dann von Vorteil, wenn, wie vorteilhaft vorgesehen sein kann, der dynamische Druck bestimmt werden soll. Der statische Druck wird insbesondere punktuell in einem Strömungsweg des Gases, insbesondere des hierin beschrieben Strömungswegs, erfasst.

Insbesondere durch die Erfassung des Gesamtdrucks und/oder durch die Bestimmung des dynamischen Drucks können Strömungseigenschaften des strömenden Gases erfasst werden, wodurch die Erkennung des Siedepunkts besonders genau sein kann, insbesondere auch dann, wenn sich das Mischverhältnis des flüssigen Stoffgemischs ändert.

Es kann vorgesehen sein, dass ein Druckverlauf des Gesamtdrucks und/oder des statischen Drucks und/oder des dynamischen Drucks erfasst wird/werden. Somit kann vorteilhaft ein Abgleich mit dem hierin beschriebenen Verlauf des Strömungsparameters und/oder dem hierin beschriebenen Temperaturverlauf erfolgen. Hierdurch kann, wie vorgesehen sein kann, besonders vorteilhaft wenigstens ein Systemparameter eines Rotationsverdampfers, insbesondere des hierin beschriebenen, gesteuert und/oder reguliert werden, wodurch eine optimale Trennung von Komponenten in einem flüssigen Stoffgemisch ermöglicht werden kann.

Bevorzugt ist sodann vorgesehen, dass der Siedepunkt des flüssigen Stoffgemischs erkannt wird, indem der erfasste Gesamtdruck und/oder der erfasste statische Druck und/oder der bestimmte dynamische Druck und/oder der zuvor genannte Druckverlauf automatisiert ausgewertet wird bzw. werden.

Insbesondere kann als Systemparameter vorgesehen sein: eine Temperatur des Heizbades, der Gesamtdruck und/oder die Drehzahl des Verdampferkolbens.

Alternativ oder zusätzlich sind zur Lösung der genannten Aufgabe erfindungsgemäß die Merkmale des nebengeordneten, auf einen Rotationsverdampfer gerichteten Anspruchs vorgesehen. Insbesondere wird somit zur Lösung der genannten Aufgabe bei einem Rotationsverdampfer der eingangs beschriebenen Art erfindungsgemäß vorgeschlagen, dass der Sensor ein Strömungssensor ist, mit dem ein Strömungsparameter des Gases messbar ist, und dass der Sensor in dem Strömungspfad angeordnet ist. Mit dem Strömungssensor kann daher genau ein oder auch mehr als ein Strömungsparameter des Gases gemessen werden. Der Strömungssensor kann ein Anemometer oder auch jede andere Art von Sensor sein, mit dem ein Strömungsparameter des Gases messbar ist.

Mit dem Strömungssensor kann vorteilhaft ein Volumenstrom, eine Masse, eine Durchflussmenge, eine Strömungsgeschwindigkeit oder eine äquivalente physikalische Eigenschaft des in dem Strömungspfad strömenden Gases erfasst werden. Somit kann ein Verlauf des Strömungsparameters, insbesondere ein wie hierin beschriebener, erfasst werden, um einen Siedepunkt des flüssigen Stoffgemischs zu erkennen.

In dem Strömungspfad angeordnet bedeutet, dass der Strömungssensor so angeordnet ist, dass er in dem Strömungspfad sensitiv ist. Der Strömungspfad des strömenden Gases umfasst zumindest einen Bereich innerhalb des erfindungsgemäßen Rotationsverdampfers, der zwischen dem Anschluss der Pumpe am Rotationsverdampfer und dem Verdampferkolben und/oder zwischen einem Kondensatorkolben des Kondensators und dem Verdampferkolben ausgebildet ist.

Das strömende Gas strömt in den Kondensator und kondensiert dort, sodass der überwiegende Teil des Gases nicht abgepumpt wird. Der Strömungsparameter, wie etwa die Strömungsgeschwindigkeit, die Durchflussmenge und/oder der Volumenstrom, des Gases schwächt sich daher in dem Kondensator ab. Daher ist besonders bevorzugt der Strömungssensor in dem Strömungspfad zwischen einem zum Verdampferkolben gerichteten Ende des Kondensators und Verdampferkolben angeordnet. Hierdurch kann besonders genau ein Verlauf des Strömungsparameters erfasst werden, der eine exakte Identifizierung des Siedepunktes ermöglicht.

Es kann auch vorgesehen sein, dass mehr als ein Strömungssensor in dem Strömungspfad angeordnet ist. Bevorzugt sind die Strömungssensoren örtlich distanziert im Strömungspfad angeordnet. Örtlich distanziert heißt, dass die Anwesenheit eines Strömungssensors im Strömungspfad keinen Einfluss auf Strömungsparameter hat, welche durch einen anderen Strömungssensor im Strömungspfad erfasst werden. Durch die Anordnung mehrerer Strömungssensoren könne mehrere Verläufe des Strömungsparameters oder von Strömungsparametern erfasst werden, um den Siedepunkt zu erkennen.

Bei einer vorteilhaften Ausführungsform kann vorgesehen sein, dass der Rotationsverdampfer eingerichtet ist, ein erfindungsgemäß ausgebildetes Verfahren zur Erkennung eines Siedepunkts eines flüssigen Stoffgemischs wie beansprucht oder hierin beschrieben auszuführen. Somit kann ein Anwender das erfindungsgemäße Verfahren mitsamt den damit einhergehenden, insbesondere den zuvor beschriebenen, Vorteilen mit dem Rotationsverdampfer durchführen.

Bei einer vorteilhaften Ausführungsform kann vorgesehen sein, dass der Rotationsverdampfer eine den Kondensator und Verdampferkolben verbindende Strömungsleitung hat. Die Strömungsleitung ist vorzugsweise lösbar mit Kondensator und Verdampferkolben verbindbar, insbesondere wenn die Strömungsleitung durch eine hierin beschriebene Messvorrichtung ausgebildet ist. Durch die Strömungsleitung kann sich der Strömungspfad ausbilden, sodass vorteilhaft der Strömungssensor in der Strömungsleitung angeordnet werden kann.

Insbesondere kann die Strömungsleitung oder ein Abschnitt der Strömungsleitung durch eine hierin beschriebene Messvorrichtung ausgebildet sein. Beispielsweise kann die Strömungsleitung durch die hierin beschriebene Rohrleitung der Messvorrichtung ausgebildet sein. Bei dieser besonders vorteilhaften Ausführungsform können der Strömungssensor und/oder ein Temperatursensor und die Strömungsleitung gleichzeitig und platzsparend an dem Rotationsverdampfer angebracht werden.

Alternativ oder zusätzlich sind zur Lösung der genannten Aufgabe erfindungsgemäß die Merkmale des nebengeordneten, auf eine Messvorrichtung gerichteten Anspruchs vorgesehen. Insbesondere wird somit zur Lösung der genannten Aufgabe bei einer Messvorrichtung der eingangs beschriebenen Art erfindungsgemäß vorgeschlagen, dass die Messvorrichtung umfasst: einen Strömungssensor, mit dem ein Strömungsparameter eines Gases erfassbar ist, einen Rohrabschnitt, in den der Strömungssensor eingeführt ist, und zwei Flansche, wobei jeder Flansch an einem offenen Ende des Rohrabschnitts ausgebildet ist.

Die Messvorrichtung kann lösbar mit dem Rotationsverdampfer verbindbar sein, sodass die Messvorrichtung vorteilhaft für Wartungen und/oder Reparaturen ausgetauscht werden kann.

Ferner kann die Messvorrichtung wenigstens ein elektrisches Verbindungskabel aufweisen.

Das elektrische Verbindungskabel kann als Stromkabel ausgebildet sein. Somit kann die Messvorrichtung, insbesondere der Strömungssensor, mit elektrischem Strom versorgt werden.

Das elektrische Verbindungskabel kann alternativ oder zusätzlich als Signalkabel ausgebildet sein. Über das Signalkabel kann ein von dem Strömungssensor aufgenommenes Signal beispielsweise an eine Recheneinheit geleitet werden. Das elektrische Verbindungskabel kann in diesem Fall als Schnittstelle zur Signalübertragung zwischen Messvorrichtung und Rotationsverdampfer, insbesondere dessen Pumpe, dienen.

Sollte in oder an einem Gehäuse der Messvorrichtung eine Recheneinheit angeordnet sein, so kann das Verbindungskabel auch als digitale Signalverbindung zwischen Recheneinheit und Steuereinheit des Rotationsverdampfers, insbesondere einer Steuereinheit der Pumpe, ausgebildet sein.

Die Pumpe des Rotationsverdampfers kann eine Steuereinheit zur Regelung des mit der Pumpe erzeugten Unterdrucks aufweisen. Der Rotationsverdampfer kann eine oder eine weitere Steuereinheit aufweisen, mit der eine Temperatur des Heizbads und/oder eine Drehgeschwindigkeit des Verdampferkolbens regelbar ist. Mittels der Steuereinheit oder der Steuereinheiten kann mindestens ein Systemparameter des Rotationsverdampfers, im Besonderen von dessen Pumpe, insbesondere die zuvor beschriebenen, geregelt werden.

Die Recheneinheit und die Steuereinheit können eine gemeinsame Baugruppe bilden. Die Steuereinheit und die Recheneinheit können auch räumlich getrennt und über ein, bevorzugt digitales, Signalkabel miteinander verbunden sein.

Bei einer vorteilhaften Ausführungsform kann vorgesehen sein, dass die Messvorrichtung eine Recheneinheit umfasst, die dazu eingerichtet ist, einen mittels des Strömungssensors erfassten Verlauf des Strömungsparameters des Gases automatisiert auszuwerten. Somit kann durch die Recheneinheit der Siedepunkt des flüssigen Stoffgemischs erkannt werden. Die Recheneinheit kann in oder an einem Gehäuse der Messvorrichtung angeordnet sein, ist jedoch bevorzugt räumlich getrennt und über ein elektrisches Verbindungskabel, beispielsweise das zuvor erwähnte Verbindungskabel, mit dem Strömungssensor verbunden. Die Recheneinheit kann ein eigenständiges Bauteil sein. Die Recheneinheit kann auch eine Recheneinheit des Rotationsverdampfers sein, insbesondere eine Recheneinheit der Pumpe. Hierbei kann es sich bevorzugt um eine Recheneinheit handeln, welche auch die Pumpensteuerung bewirkt. Die Recheneinheit kann in oder an dem Pumpengehäuse angeordnet sein.

Bei einer vorteilhaften Ausführungsform kann vorgesehen sein, dass der Rotationsverdampfer, insbesondere die Pumpe des Rotationsverdampfers, und/oder die Messvorrichtung wenigstens einen Drucksensor umfasst, mit dem vorteilhaft eine Druckentwicklung in dem Rotationsverdampfer verfolgt werden kann. Ebenso kann vorgesehen sein, dass durch Drucksensor und der damit erfassten Daten ein Druckverlauf erstellt wird, welches zur Regulierung von Systemparametern des Rotationsverdampfers und/oder zur Erkennung des Siedepunkts des flüssigen Stoffgemischs automatisiert ausgewertet werden kann.

Alternativ oder zusätzlich kann vorgesehen sein, dass die Messvorrichtung einen Temperatursensor umfasst, mit welchem eine Temperatur des strömenden Gases erfasst werden kann. Durch die Erfassung der Temperatur des strömenden Gases kann eine Erkennung des Siedepunkts noch exakter durchgeführt werden, insbesondere wenn ein wie hierin beschriebener Temperaturverlauf erfasst wird.

Alternativ oder zusätzlich sind zur Lösung der genannten Aufgabe erfindungsgemäß die Merkmale des nebengeordneten, auf ein Verwendung eines Strömungssensors gerichteten Anspruchs vorgesehen. Insbesondere wird somit zur Lösung der genannten Aufgabe bei der Verwendung vorgeschlagen, dass ein Strömungssensors zur Erfassung eines Strömungsparameters eines in einem Rotationsverdampfer strömenden Gases verwendet wird. Wie zuvor beschrieben, hat die Erfindung erkannt, dass die Erfassung eines Strömungsparameters des strömenden Gases besonders vorteilhaft zur Erkennung des Siedepunkts des flüssigen Stoffgemischs verwendet werden kann. Somit ist die erfindungsgemäße Verwendung des Strömungssensors besonders vorteilhat bei einem hierin beschriebenen Verfahren und/oder einem hierin beschriebenen Rotationsverdampfer und/oder bei einer hierin beschriebenen Messvorrichtung.

Alternativ oder zusätzlich sind zur Lösung der genannten Aufgabe erfindungsgemäß die Merkmale des nebengeordneten, auf ein Verwendung einer Messvorrichtung in einem Rotationsverdampfer gerichteten Anspruchs vorgesehen. Insbesondere wird somit zur Lösung der genannten Aufgabe bei der erwähnten Verwendung vorgeschlagen, dass eine wie hierin beschriebene und/oder beanspruchte Messvorrichtung verwendet wird. Hierdurch kann die Erkennung eines Siedepunkts in einem Rotationsverdampfer besonders genau erfolgen, wodurch die Trennung von Komponenten eines flüssigen Stoffgemischs verbessert durchgeführt werden kann.

Alternativ oder zusätzlich sind zur Lösung der genannten Aufgabe erfindungsgemäß die Merkmale des nebengeordneten, auf ein Verfahren zur Steuerung eines Rotationsverdampfers gerichteten Anspruchs vorgesehen. Insbesondere wird somit zur Lösung der genannten Aufgabe bei dem Verfahren der eingangs beschriebenen Art vorgeschlagen, dass ein Siedepunkt eines flüssigen Stoffgemischs, das sich in dem Verdampferkolben des Rotationsverdampfers befindet, mittels eines wie hierin beschriebenen Verfahrens zur Erkennung eines Siedepunkts eines flüssigen Stoffgemischs erkannt wird und dass hierdurch ein Steuersignal ausgelöst wird, mit dem ein Systemparameter des Rotationsverdampfers geregelt wird.

Bei dem Systemparameter kann es sich beispielsweise um einen in dem Rotationsverdampfer herrschenden Gesamtdruck, wie etwa der bereits zuvor erwähnte Gesamtdruck, um eine Temperatur des Heizbades und/oder um eine Drehzahl des rotierenden Verdampferkolbens handeln.

Zur Erkennung des Siedepunkts kann ein Messsignal mittels des Strömungssensors erfasst werden. Das Messsignal kann einen Verlauf des Strömungsparameters des strömenden Gases abbilden. Dass Messignal sodann, insbesondere über ein elektrisches Verbindungskabel, an eine Recheneinheit weitergeleitet werden, wobei die Recheneinheit wie zuvor ausgebildet und angeordnet sein kann. In der Recheneinheit kann sodann durch computergestützte Auswertung des Verlaufs des Strömungsparameters der Siedepunkt des flüssigen Stoffgemischs erfasst werden.

Erkennt die Recheneinheit einen Siedepunkt, kann sie ein Steuersignal auslösen, welches sodann über eine Signalverbindung an eine Steuereinheit der Pumpe und/oder an eine weitere Steuereinheit des Rotationsverdampfers gesendet wird. Die Steuereinheit der Pumpe kann sodann den erzeugten Unterdruck beispielsweise so regeln, dass der erreichte Druck nicht mehr weiter abgesenkt, sondern gehalten wird. Alternativ oder zusätzlich kann die weitere Steuereinheit des Rotationsverdampfers die Temperatur des Heizbads so regeln, dass die Temperatur nicht weiter erhöht, sondern konstant gehalten wird. Alternativ oder zusätzlich kann auch Regelung der Drehgeschwindigkeit des Verdampferkolbens so erfolgen, dass der Siedepunkt gehalten wird. Hierdurch wird daher mindestens ein Systemparameter des Rotationsverdampfers geregelt.

Die Steuerung wenigstens eine Systemparameters des Rotationsverdampfers ist besonders vorteilhaft, wenn sich das Mischverhältnis der wenigstens zwei Komponenten des flüssigen Stoffgemischs im Verlauf des Trennungsverfahrens ändert und/oder wenn sich die Bedingungen zum Erreichen des Siedepunktes im Rotationsverdampfer ändern. Durch die Steuerung des Rotationsverdampfers kann diesen Änderungen entgegengewirkt werden, sodass die Trennung der wenigstens zwei Komponenten des flüssigen Stoffgemischs optimal angepasst bzw. durchgeführt werden kann.

Insbesondere kann der Gesamtdruck des Rotationsverdampfers gesteuert werden. So kann vorgesehen sein, dass die Steuerungseinheit die hierin beschriebene Pumpe ansteuert und reguliert, um den Gesamtdruck im Rotationsverdampfer zu halten oder zu reduzieren. Beispielsweise kann vorteilhaft vorgesehen sein, dass wenn der Siedepunkt erreicht und erkannt ist, die Recheneinheit diese Information an die Steuereinheit übermittelt, woraufhin die Steuereinheit die Pumpe so ansteuert, dass der Gesamtdruck im Rotationsverdampfer gehalten wird.

Die Steuerung umfasst insbesondere: Die Regulierung der Heizbadtemperatur, die Änderung der Pumpendrehzahl und/oder der Drehzahl des rotierbaren Verdampferkolbens.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Figur 1: einen erfindungsgemäßen Rotationsverdampfer mit einer erfindungsgemäßen Messvorrichtung,
- Figur 2: eine Seitenansicht der Messvorrichtung aus Figur 1,
- Figur 3: die Messvorrichtung aus Figur 2 als Schnittzeichnung,
- Figur 4: ein erfindungsgemäßes Verfahren zur Erkennung eines Siedepunkts eines flüssigen Stoffgemischs unter Verwendung des in Figur 1 gezeigten Rotationsverdampfers,
- Figur 5: ein erfindungsgemäßes Verfahren zur Steuerung des Rotationsverdampfers aus Figur 1,
- Figur 6: einen erfassten Verlauf eines Strömungsparameters während des Verfahrens aus Figur 4.

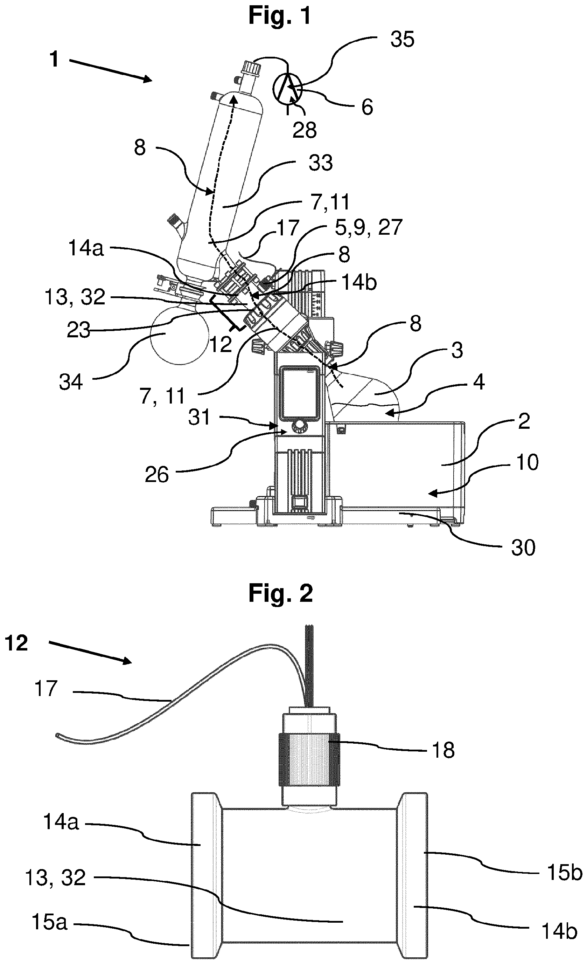

Figur 1 zeigt einen Rotationsverdampfer 1 im Betrieb, welcher ein mit einem Heizbad 10 befülltes Behältnis 2 aufweist. Das Heizbad 10 ist Wasser oder Öl. Ferner hat der Rotationsverdampfer 1 einen rotierbaren Verdampferkolben 3, in welchem sich das flüssige Stoffgemisch 4 befindet. Der rotierbare Verdampferkolben 3 ist in das Heizbad 10 eingetaucht und kann über seine Längsachse in dem Heizbad 10 rotiert werden. Das Heizbad 10 wird durch ein Heizelement 30 erwärmt.

Der Rotationsverdampfer 1 weist ferner einen Kondensator 33 auf, der mit Kühlwasser und/oder einer anderen Kühlflüssigkeit gespeist ist, um eine Kühlfläche auszubilden, an der ein in einem Strömungspfad 8 strömendes Gas 7 niederschlägt, sodass ein Kondensat des Gases 7 entsteht und in den Auffangkolben 34 abfließen kann. Der Strömungspfad 8 ist zwischen dem Verdampferkolben 3 und einer Pumpe 6 ausgebildet, da der durch die Pumpe 6 erzeugte Unterdruck das im Verdampferkolben 3 freigesetzte Gas 7 aus dem Verdampferkolben 3 strömen lässt. Die Pumpe 6 weist eine Steuereinheit 35 auf, mit der ein von der Pumpe 6 erzeugter Unterdruck gesteuert werden kann.

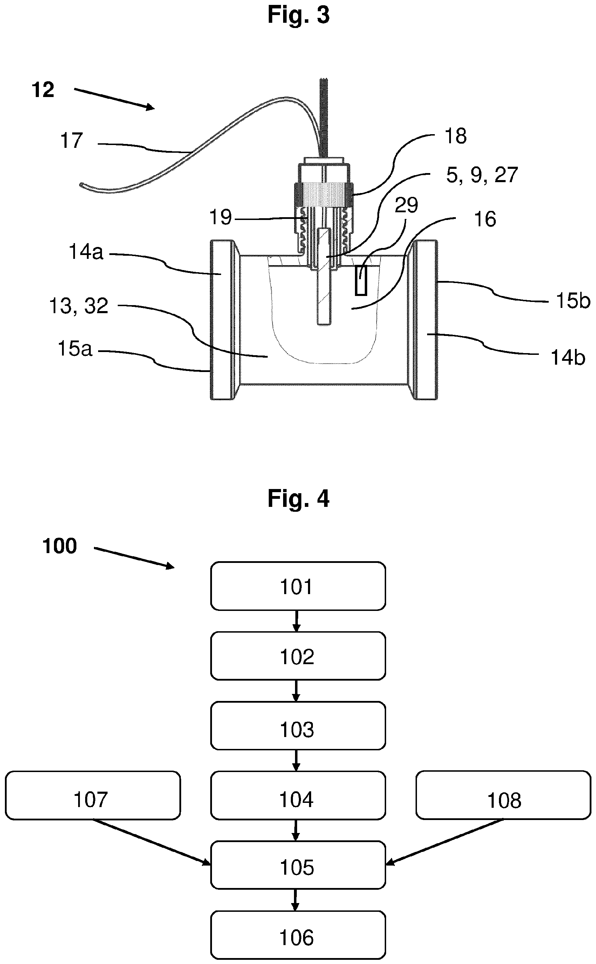

Ferner ist aus Figur 1 ersichtlich, dass der Rotationsverdampfer eine den Kondensator 33 und Verdampferkolben 3 verbindende Strömungsleitung 32 hat, wobei die Strömungsleitung 32 durch eine in den Figuren 2 und 3 näher beschriebene Messvorrichtung 12 ausgebildet ist. Dabei wird die Strömungsleitung 32 durch die Rohrleitung 13 der Messvorrichtung 12 gebildet. In der Rohrleitung 13, 32 ist der Strömungspfad 7 ausbildbar bzw. ausgebildet, sodass hier optimal ein Sensor 5, welcher ein Strömungssensor 9 ist, so in den Strömungspfad 8 positioniert ist, dass ein Strömungsparameter 11 des strömenden Gases 7, wie etwa eine Strömungsgeschwindigkeit, eine Durchflussmenge, eine Volumenstrom oder eine andere äquivalente physikalische Eigenschaft des strömenden Gases, durch den Sensor 5, 9 erfasst wird.

Die Messvorrichtung 12 ist über zwei Flansche 14a, 14b, welche an den offenen Enden des Rohrabschnitts 13 ausgebildet sind (vgl. Figuren 2 und 3), mit dem Kondensator 33 und dem Verdampferkolben 3 dicht verbunden. Somit kann kein Gas 7 aus dem Rotationsverdampfer 1 strömen.

Wie in der Schnittansicht der Messvorrichtung 12 in Figur 3 zu erkennen ist, ist der Sensor 5, 9, 27 in einen Innenraum 16 des Rohrabschnitts 13 eingeführt. Der außerhalb des Rohrabschnitts 13 befindliche Teil des Sensors 5, 9, 27 ist von einer Einhausung 18 der Messvorrichtung 12 umgeben und vor äußeren Einflüssen geschützt. Die den Sensor 5, 9, 27 tragende Einhausung 18 ist durch form- und kraftschlüssig mit dem Rohrabschnitt 13 verbunden. Ein Form- und Kraftschluss kann beispielsweise durch ein Gewinde 19 erfolgen.

Die Recheneinheit 26 ist dazu eingerichtet, von dem Strömungssensor 5, 9, 27 in Schritt 104 erfasste Strömungsparameter 11 des Gases 8 automatisiert, d.h. computergestützt, auszuwerten 106.

Die Messvorrichtung 12 umfasst ferner eine Recheneinheit 26, die dazu eingerichtet ist, von dem Strömungssensor 5, 9, 27 erfasste Strömungsparameter 11 des Gases 8 automatisiert, d.h. computergestützt, auszuwerten 106. Die Recheneinheit 26 ist hierbei von dem Einbauteil der Messvorrichtung 12, welches den Rohrabschnitt 13 umfasst, räumlich getrennt. In einem alternativen Ausführungsbeispiel ist die Recheneinheit 26 durch die Steuereinheit 35 der Pumpe 6 gegeben.

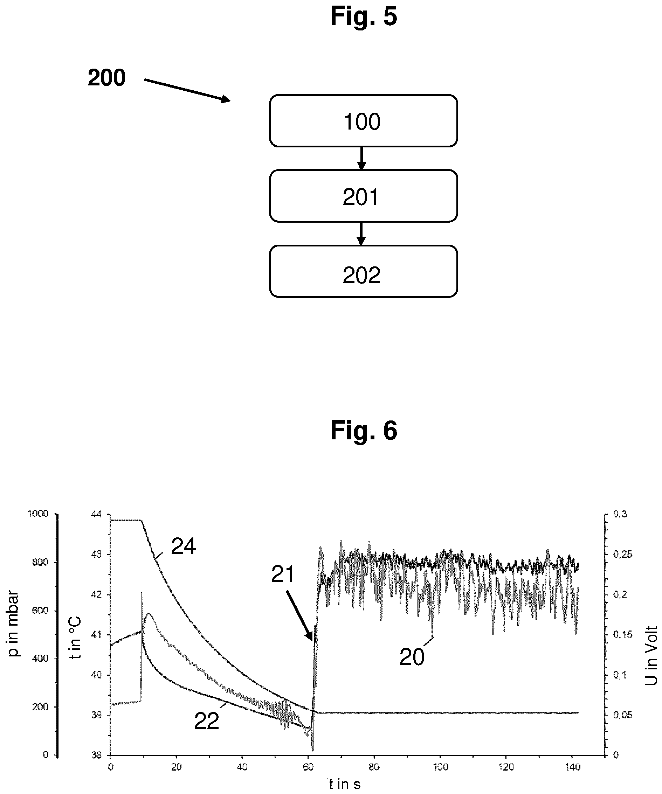

Ferner hat die Messvorrichtung 12 wenigstens ein elektrisches Verbindungskabel 17. Das in den Figuren 1, 2 und 3 gezeigte elektrisches Verbindungskabel 17 dient als Schnittstelle zur Signalübertragung 201 zwischen dem Strömungssensor 9 und der Recheneinheit 26. Die Recheneinheit 26 ist mit der Steuereinheit 31 des Rotationsverdampfers 1 und/oder mit der Steuereinheit 35 der Pumpe 6 signalverbunden. Somit können Systemparameter des Rotationsverdampfers 1, insbesondere von dessen Pumpe 6, durch die Steuereinheiten 31, 35 gemäß dem in Figur 5 dargelegten Verfahren gesteuert werden.

In einer nicht gezeigten Ausführungsform dient das oder ein weiters elektrisches Verbindungskabel der elektrischen Versorgung des Sensors 5, 9, 27 mit elektrischem Strom.

In Figur 3 ist ferner zu erkennen, dass die Messvorrichtung 12 einen Temperatursensor 29 aufweist. In einem alternativen Ausführungsbeispiel der Messvorrichtung 12 weist diese keinen Temperatursensor 29 auf.

Im Folgenden wird beschrieben, wie mit dem zuvor beschriebenen Rotationsverdampfer 1 und der darin verwendeten Messvorrichtung 12 ein Verfahren 100 zur Erkennung eines Siedepunkts 21 des flüssigen Stoffgemisch 4 durchgeführt werden kann. Das Verfahren 100 ist in Figur 4 illustriert.

Zunächst wird das flüssige Stoffgemisch 4, welches aus zwei Komponenten mit unterschiedlichen Siedetemperaturen bestehen, in den Verdampferkolben 3 des Rotationsverdampfers 1 überführt. Anschließend wird der Verdampferkolben 3 in das Heizbad 10 eingetauscht und um seine Längsachse rotiert.

Das Heizelement 30 erwärmt in Schritt 101 das im Behältnis 2 befindliche Heizbad 10.

Es wird vor oder während der Erwärmung 101 die Pumpe 6 in Schritt 102 eingeschaltet, wodurch ein Unterdruck in dem Rotationsverdampfer 1 entsteht. Infolge des Einschaltens 102 der Pumpe 6 und dem damit ausgebildeten Unterdruck sowie infolge der Erwärmung nähert sich das flüssige Stoffgemisch 4 dem Siedepunkt 21 an. Wird der Siedepunkt 21 erreicht, beginnt das flüssige Stoffgemisch 4 zu sieden und das freigesetzte Gas 9 strömt in Schritt 103 aus dem Verdampferkolben 3.

Durch das Strömen des Gases 8 bildet sich nun der Strömungspfad 7 des Gases 8 zwischen dem Anschluss der Pumpe 6 am Rotationsverdampfer 1 und dem Flüssigkeitsspiegel des im Verdampferkolben 3 befindlichen flüssigen Stoffgemischs 4 aus.

Das strömende Gas 8 strömt durch die Rohrleitung 13, 32 der Messvorrichtung 12 des Rotationsverdampfers 1. Der Strömungssensor 5, 9, 27 erfasst in Schritt 104 einen zeitlichen Verlauf 20 eines Strömungsparameters 11 des strömenden Gases 8, indem kontinuierlich der Strömungsparameter 11 des Gases 8 erfasst wird. Ein beispielhafter Verlauf 20 des Strömungsparameters 11 ist in Figur 6 dargestellt.

Die Recheneinheit 26 der Messvorrichtung 12 wertet in Schritt 105 unter Verwendung eines Algorithmus den erfassten Verlauf 20 des Strömungsparameters 11 automatisiert aus und erkennt sodann in Schritt 106 den Siedepunkt 21 des flüssigen Stoffgemischs 4.

Ferner wird zeitlich mit Erfassung 104 des Verlaufs 20 des Strömungsparameters durch den Temperatursensor 29 ein Temperaturverlauf 22 erfasst 107. Ebenso wird in Schritt 108 durch den, vorzugsweise in der Pumpe 6 integrierten, Drucksensor 28 der Gesamtdruck 23 erfasst. Hierbei wird ein Druckverlauf erfasst, welcher zusammen mit dem Temperaturverlauf 22 und dem Verlauf 20 des Strömungsparameters 11 zur Erkennung des Siedepunkts 21 automatisiert ausgewertet wird. Die Schritte 101 bis 108 müssen nicht chronologisch aufeinanderfolgen, sondern können auch in anderer Reihenfolge, insbesondere auch gleichzeitig erfolgen. Somit ist die Trennung der Komponenten des flüssigen Stoffgemischs 4 verbessert, insbesondere, da Systemparameter des Rotationsverdampfer 1 aufgrund der erfassten zeitlichen Verläufe 20, 22, 24 durch das im Folgenden beschriebene Verfahren 200 zur Steuerung eines Rotationsverdampfers 1 gesteuert werden können, vgl. auch Fig. 5.

Das Verfahren 200 umfasst in einem ersten Schritt ein Verfahren 100 zur Erkennung eines Siedepunkts 21, welches zuvor genauer beschrieben worden ist, vgl. auch Fig. 4. Wird ein Siedepunkt erkannt, wird in Schritt 201 ein Steuersignal ausgelöst, mit dem sodann in Schritt 202 ein Systemparameter, insbesondere ein Gesamtdruck 23, des Rotationsverdampfers 1 geregelt wird. Das Steuersignal wird in der Recheneinheit 26 ausgelöst und an die Steuereinheit 31 des Rotationsverdampfers 1 und an die Steuereinheit 35 der Pumpe 35 gesendet. Erhält die Steuereinheit 35 ein Steuersignal, das das Erkennen des Siedepunkts signalisiert, wird mittels der Steuereinheit 35 der mit der Pumpe 6 erzeugte Unterdruck auf einem konstanten Wert gehalten. Die Steuereinheit 31 regelt entsprechend, dass die Heizbadtemperatur und/oder die Drehzahl des Rotationsverdampfers konstant gehalten werden.

Hierzu wobei infolge des durch das Verfahren 100 erfassten Strömungsparameters 11 des Gases 8 und/oder des erkannten 105 Siedepunkts 21 eine Signalübertagung 201 durch die Recheneinheit 26 des Rotationsverdampfers 1 an die Steuereinheit 31 des Rotationsverdampfers 1 durchgeführt wird, woraufhin die Steuereinheit 31 den Gesamtdruck 23 des Rotationsverdampfers 1 steuert 202. Zur Steuerung des Gesamtdrucks 23 wird die Leistung der Pumpe 6 gesteuert.

Das Gas 8 strömt bis in den Kondensator 33, wo es kondensiert wird und in den Auffangkolben 34 abfließt. Somit wird eine vollständige Trennung der wenigstens zwei Komponenten des flüssigen Stoffgemischs 4 durch den Rotationsverdampfer 1 mit Messvorrichtung 12 und die Verfahren 100 und 200 verbessert durchgeführt.

Figur 6 zeigt einen in einem realen Versuch gemäß des zuvor beschriebenen Verfahrens 100 und 200 (vgl. Fig. 4 und Fig. 5) gemessenen Verlaufs 20 eines Strömungsparameters, der das von dem Strömungssensor erzeugte Spannungssignal wiedergibt und somit äquivalent unter anderem zur Strömungsgeschwindigkeit, zur Durchflussmenge und zum strömenden Volumenstrom ist. Zum Verständnis des in Figur 6 gezeigten Graphen ist zu beachten: U beschreibt das Spannungssignal des Strömungssensors 9 in Volt, der Druckverlauf 24 ist der Gesamtdruck 23 angegeben als p in mbar, der Temperaturverlauf 22 ist die Temperatur des Gases 8 im Rotationsverdampfer 2 angegeben als t in °C und die Erfassungszeit t der Verläufe 20, 22 und 24 ist in Sekunden s angegeben. Figur 6 zeigt einen steilen Anstieg des Verlaufs 20 des Strömungsparameters 11 bzw. des Strömungsparameters 11 nach Sekunde 60. Dieser Anstieg korreliert mit einem Anstieg der Temperatur des Gases 8, veranschaulicht durch den Temperaturverlauf 22. Da der Siedepunkt 21 etwa bei Sekunde 60 erreicht ist, übermittelt die Recheneinheit 26 diese Information der Steuereinheit 31, woraufhin die Leistung der Pumpe 6 gesteuert 202 wird, sodass der Gesamtdruck 23 ab Erreichen des Siedepunktes 21 konstant gehalten wird, was durch den Druckverlauf 24 ab Sekunde 60 gut zu erkennen ist.

Die Erfindung schlägt allgemein ein Verfahren 100 zur Erkennung 105 eines Siedepunkts 21 eines flüssigen Stoffgemischs 4, das sich in einem Verdampferkolben 3 eines Rotationsverdampfers 1 befindet, vor, wobei ein Heizbad 10, in das der Verdampferkolben 3 eintaucht, erwärmt 101 wird, wobei eine einen Unterdruck erzeugende Pumpe 6 eingeschaltet 102 wird, so dass ein infolge der Erwärmung 101 und/oder dem Unterdruck aus dem flüssigen Stoffgemisch 4 freigesetztes Gas 8 aus dem Verdampferkolben 3 strömt 103, dadurch gekennzeichnet, dass ein Verlauf 20 eines Strömungsparameters 11 des strömenden Gases 8 erfasst 104 wird und dass der Siedepunkt 21 des flüssigen Stoffgemischs 4 erkannt 105 wird, indem das erfasste 104 Verlauf 20 des Strömungsparameters 11 automatisiert ausgewertet 106 wird. Ferner werden ein Rotationsverdampfer 1, eine Messvorrichtung 12 und ein Verfahren 200 zur Steuerung des Rotationsverdampfers 1 vorgeschlagen.

### Bezugszeichenliste

- 1: Rotationsverdampfer
- 2: Behältnis
- 3: Verdampferkolben
- 4: flüssiges Stoffgemisch
- 5: Sensor
- 6: Pumpe
- 7: Strömungspfad
- 8: strömendes Gas
- 9: Strömungssensor
- 10: Heizbad
- 11: Strömungsparameter
- 12: Messvorrichtung
- 13: Rohrabschnitt von 12
- 14: Flansch von 12
- 15: offenes Ende von 13
- 16: Innenraum von 13
- 17: elektrisches Verbindungskabel von 12
- 18: Einhausung von 12
- 19: Gewinde von 12
- 20: Verlauf des Strömungsparameters 11
- 21: Siedepunkt von 4
- 22: Temperaturverlauf von 8
- 23: Gesamtdruck
- 24: Druckverlauf
- 26: Recheneinheit
- 27: Anemometer
- 28: Drucksensor
- 29: Temperatursensor
- 30: Heizelement
- 31: Steuereinheit von 1
- 32: Strömungsleitung von 1
- 33: Kondensator
- 34: Auffangkolben
- 35: Steuereinheit von 6

- 100: Verfahren zur Erkennung eines Siedepunkts
- 101: Erwärmung von 10
- 102: Einschalten von 6
- 103: Strömen von 8
- 104: Erfassung eines 20 von 8
- 105: Erkennung eines Siedepunkts 21
- 106: automatische Auswertung des Verlaufs 20
- 107: Erfassung von 22
- 108: Erfassung von 23 und/oder 24

- 200: Verfahren zur Steuerung eines Rotationsverdampfers
- 201: Auslösen eines Steuersignals
- 202: Steuerung eines Systemparameters von 1

- p: Druck
- t: Temperatur
- U: Spannung

## Patentansprüche

1. Verfahren (100) zur Erkennung (105) eines Siedepunkts (21) eines flüssigen Stoffgemischs (4), das sich in einem Verdampferkolben (3) eines Rotationsverdampfers (1) befindet, wobei ein Heizbad (10), in das der Verdampferkolben (3) eintaucht, erwärmt (101) wird, wobei eine einen Unterdruck erzeugende Pumpe (6) eingeschaltet (102) wird, so dass ein infolge der Erwärmung (101) und/oder dem Unterdruck aus dem flüssigen Stoffgemisch (4) freigesetztes Gas (8) aus dem Verdampferkolben (3) strömt (103), **dadurch gekennzeichnet, dass** ein Verlauf (20) eines Strömungsparameters (11) des strömenden Gases (8) erfasst (104) wird und dass der Siedepunkt (21) des flüssigen Stoffgemischs (4) erkannt (105) wird, indem der erfasste (104) Verlauf (20) des Strömungsparameters (11) automatisiert ausgewertet (106) wird.

2. Verfahren (100) nach Anspruch 1, **dadurch gekennzeichnet, dass** eine Erfassung (104) des Strömungsparameters (11) des strömenden Gases (8) an mehreren, zeitlich beabstandeten, Zeitpunkten, insbesondere zwei Zeitpunkten, und/oder zeitlich kontinuierlich erfolgt.

3. Verfahren (100) nach einem der voranstehenden Ansprüche, **dadurch gekennzeichnet, dass** ein Temperaturverlauf (22) des strömenden Gases (8) erfasst (107) wird und dass der Siedepunkt (21) des flüssigen Stoffgemischs (4) erkannt (105) wird, indem der erfasste (104) Temperaturverlauf (20) automatisiert ausgewertet (106) wird.

4. Verfahren (100) nach einem der voranstehenden Ansprüche, **dadurch gekennzeichnet, dass** ein Gesamtdruck (23) und/oder ein statischer Druck (24) erfasst (108) wird/werden, und/oder dass ein dynamischer Druck bestimmt wird, und dass der Siedepunkt (21) des flüssigen Stoffgemischs (4) erkannt (105) wird, indem der erfasste Gesamtdruck (23) und/oder der erfasste statische Druck (24) und/oder der bestimmte dynamische Druck automatisiert ausgewertet wird/werden.

5. Verfahren nach einem der vorangehenden Ansprüche, **dadurch gekennzeichnet, dass** die Auswertung des Verlaufs (20) des Strömungsparameters umfasst, einen Wert einer Änderung des erfassten Strömungsparameters in einem vorgegebenen Zeitabschnitt zu bestimmen, und dass der Siedepunkt (21) erkannt (105) wird, indem ein Überschreiten eines vorgegebenen Änderungswerts festgestellt wird.

6. Rotationsverdampfer (1), umfassend ein Behältnis (2) für ein Heizbad (10), einen in dem Behältnis (2) rotierbaren Verdampferkolben (3), einen Kondensator (33), einen Auffangkolben (34), einen Sensor (5) und eine Pumpe (6), wobei durch die Pumpe (6) zwischen dem Verdampferkolben (3) und der Pumpe (6) ein Strömungspfad (7) eines aus dem Verdampferkolben (3) strömenden Gases (8) ausbildbar ist, **dadurch gekennzeichnet, dass** der Sensor (5) ein Strömungssensor (9) ist, mit dem ein Strömungsparameter (11) des Gases (8) erfassbar (104) ist, und dass der Sensor (5) in dem Strömungspfad (7) angeordnet ist.

7. Rotationsverdampfer (1) nach dem vorstehenden Anspruch, **dadurch gekennzeichnet, dass** der Rotationsverdampfer (1) eingerichtet ist, das Verfahren (100) nach einem der vorangehenden Ansprüche auszuführen.

8. Rotationsverdampfer (1) nach einem der beiden vorangehenden Ansprüche, **dadurch gekennzeichnet, dass** der Rotationsverdampfer (1) eine den Kondensator (33) und Verdampferkolben (3) verbindende Strömungsleitung (32) hat, insbesondere wobei die Strömungsleitung (32) oder ein Abschnitt der Strömungsleitung (32) durch eine wie hierin beanspruchte Messvorrichtung (12) ausgebildet ist.

9. Messvorrichtung (12) für einen Rotationsverdampfer (1), umfassend einen Strömungssensor (9), mit dem ein Strömungsparameter (11) eines Gases (8) erfassbar (104) ist, einen Rohrabschnitt (13), in den der Strömungssensor (9) eingeführt ist, und zwei Flansche (14a, 14b), wobei jeder Flansch (14a, 14b) an einem offenen Ende (15) des Rohrabschnitts (13) ausgebildet ist.

10. Messvorrichtung (12) nach dem vorstehenden Anspruch, **dadurch gekennzeichnet, dass** die Messvorrichtung (12) eine Recheneinheit (26) umfasst, die dazu eingerichtet ist, einen mittels des Strömungssensors (9) erfassten (104) Verlaufs des Strömungsparameters (11) des Gases (8) automatisiert auszuwerten (106).

11. Verwendung eines Strömungssensors (9) zur Erfassung (104) eines Strömungsparameters (11) eines in einem Rotationsverdampfer (1) strömenden Gases (8).

12. Verwendung einer Messvorrichtung (12) nach einem der Ansprüche 9 bis 10 in einem Rotationsverdampfer (1).

13. Verfahren (200) zur Steuerung eines Rotationsverdampfers (1) nach einem der Ansprüche 6 bis 8, wobei ein Siedepunkt (21) eines flüssigen Stoffgemischs (4), das sich in dem Verdampferkolben (3) des Rotationsverdampfers (1) befindet, mittels eines Verfahrens (100) nach einem der Ansprüche 1 bis 5 erkannt wird (105) und wobei hierdurch ein Steuersignal ausgelöst wird (201), mit dem ein Systemparameter, insbesondere ein Gesamtdruck (23), des Rotationsverdampfers (1) geregelt (202) wird.
